# EUROPEAN PATENT APPLICATION

(11) **EP 3 888 992 A1**
(43) Date of publication of application: **06.10.2021**
(21) Application number: 21160169.5
(22) Date of filing: 02.03.2021
(51) Int. Cl.: B60W 60/00

(54) **AUTOMATED DRIVING CONTROL SYSTEM, VEHICLE, AND METHOD OF AUTOMATED DRIVING CONTROL**

(30) Priority: 01.04.2020 JP 2020065824
(71) Applicant: MAZDA MOTOR CORPORATION, Hiroshima 730-8670 (JP)
(72) Inventor: SUGANO, Takashi, Fuchu-cho, Aki-gun,, Hiroshima 730-8670 (JP)
(74) Representative: Müller-Boré & Partner Patentanwälte PartG mbB

(57) **Abstract**

An automated driving control system has: a steering pressure sensor that detects holding of a steering by the driver; an accelerator sensor that detects an operation of an accelerator pedal by the driver; and an ECU configured to execute control for making a vehicle drive automatically. In the case where the steering pressure sensor detects holding of the steering by the driver and the accelerator sensor detects the operation of the accelerator pedal by the driver while the vehicle is made to drive automatically, the ECU cancels the automated driving of the vehicle, and controls the vehicle at least according to the operation of the accelerator pedal.

## Description

### [Technical Field]

The present invention relates to an automated driving control system that executes control to make a vehicle drive automatically. The present invention also relates to a vehicle and a method of automated driving control.

### [Background Art]

Conventionally, a technique related to switching between manual driving by a driver and automated driving for automatically driving a vehicle has been proposed. For example, a vehicle control system capable of performing automated driving is disclosed in Patent document 1. The vehicle control system has: a first automated driving mode, an automation rate (a degree of control) of which is high; and a second automated driving mode, the automation rate of which is low, stops the automated driving by a command of the vehicle, and stops the automated driving by a switch operation. In addition, it is disclosed in Patent document 2 that, after the driver operates a switch for the automated driving, such a notification that preparation for the automated driving is completed is made, and the automated driving is thereafter initiated at the time when the driver takes his/her hands off a steering wheel or takes his/her foot off an accelerator pedal.

### [Prior Art Documents]

### [Patent documents]

[Patent document 1] JP-A-2019-6280
[Patent document 2] US Patent No. 8,352,110

### [Summary]

### [Problem to be solved]

By the way, it is considered to be favorable that the automated driving is easily switched to the manual driving without the driver performing a complicated operation (for example, a switch operation) . However, in the case where the automated driving is switched to the manual driving too easily, the automated driving is switched to the manual driving before the driver is ready therefor. As a result, a safety problem possibly occurs. In one example, in the case where an accelerator operation by the driver is only required to switch the automated driving to the manual driving, the automated driving is switched to the manual driving when the driver's foot is unintentionally stuck to an accelerator pedal, which possibly causes unexpected acceleration.

The present invention has been made to solve the above-described problems and therefore has a purpose of switching from automated driving to manual driving without a driver feeling bothersome and capable of appropriately securing safety during this switching.

### [Means for solving the Problem]

In order to achieve the above purpose, the present invention provides an automated driving control system for a vehicle. The automated driving control system has: a steering sensor that detects holding of a steering wheel by a driver; an accelerator sensor that detects an operation of an accelerator pedal by the driver; and a controller configured to execute control for making the vehicle drive automatically. The controller is configured to cancel the automated driving of the vehicle and control the vehicle at least according to the operation of the accelerator pedal in the case where the steering sensor detects holding of the steering wheel by the driver and the accelerator sensor detects the operation of the accelerator pedal by the driver while the vehicle is made to drive automatically.

According to the present invention that is configured as described above, in the case where the driver holds the steering wheel (hereinafter also simply referred to as a "steering") and operates the accelerator pedal in the automated driving, the controller cancels the automated driving and manually controls the vehicle at least according to the operation of the accelerator pedal by the driver. That is, in the case where the driver operates the accelerator pedal while holding the steering in the automated driving, the controller promptly switches the automated driving to manual driving even when the driver does not perform a switch operation. In this way, it is possible to appropriately switch the automated driving to the manual driving such that the driver can promptly and manually perform a steering operation and an accelerator operation to pass a front vehicle at a low vehicle speed during the automated driving, for example. Therefore, according to the present invention, it is possible to appropriately switch the driving mode in response to a request from the driver (corresponding to holding of the steering and the accelerator operation) without the driver feeling bothersome. That is, it is possible to switch the automated driving to the manual driving at preferred timing by the driver.

Meanwhile, according to the present invention, when both conditions of holding of the steering and the operation of the accelerator pedal are satisfied, the automated driving is switched to the manual driving. Thus, such switching can be performed after the driver is ready therefor. As a result, it is possible to appropriately secure safety during switching from the automated driving to the manual driving. In one example, in the case where the accelerator operation is only required to switch the automated driving to the manual driving, the automated driving is switched to the manual driving when the driver's foot is unintentionally stuck to the accelerator pedal, which possibly causes unexpected acceleration. However, according to the present invention, it is possible to appropriately suppress generation of such unexpected acceleration.

As it has been described so far, according to the present invention, it is possible to switch the automated driving to the manual driving without the driver feeling bothersome and to appropriately secure the safety during this switching.

In the present invention, the controller preferably resumes the automated driving of the vehicle in the case where, after the automated driving of the vehicle is canceled, the steering sensor no longer detects holding of the steering wheel by the driver and the accelerator sensor no longer detects the operation of the accelerator pedal by the driver.

According to the present invention that is configured as described above, in the case where the driver does not operate the accelerator pedal and releases the steering in the manual driving, the controller promptly switches the manual driving to the automated driving even when the driver does not perform a switch operation. In this way, it is possible to appropriately resume the automated driving from the manual driving without the driver feeling bothersome.

In the present invention, the controller preferably continues the automated driving of the vehicle in the case where the steering sensor does not detect holding of the steering wheel by the driver but the accelerator sensor detects the operation of the accelerator pedal by the driver while the vehicle is made to travel automatically. The controller preferably continues the automated driving of the vehicle in the case where the accelerator sensor does not detect the operation of the accelerator pedal by the driver but the steering sensor detects holding of the steering wheel by the driver while the vehicle is made to travel automatically.

According to the present invention that is configured as described above, the controller does not switch the automated driving to the manual driving in the case where only the accelerator operation is performed or only the steering is held in the automated driving. Therefore, it is possible to effectively secure the safety during switching from the automated driving to the manual driving.

In the present invention, the controller is preferably configured to determine whether the vehicle is in a state capable of performing the automated driving when the driver makes an automated driving request and to perform the automated driving of the vehicle when determining that the vehicle is in the state capable of performing the automated driving.

According to the present invention that is configured as described above, the automated driving is initiated in the state where the vehicle can perform the automated driving. Therefore, it is possible to appropriately secure the safety and the like during shifting to the automated driving.

The steering sensor is preferably configured to detect a pressure applied to the steering wheel.

The controller is preferably configured to detect holding of the steering wheel by the driver in the case where the pressure detected by the steering sensor is equal to or higher than a specified value.

The controller is preferably configured to cancel the automated driving of the vehicle and control the vehicle at least according to the operation of the accelerator pedal in the case where the pressure detected by the steering sensor is equal to or higher than the specified value and the accelerator sensor detects the operation of the accelerator pedal by the driver while the vehicle is made to drive automatically.

The controller is preferably configured to resume the automated driving of the vehicle in the case where, after the automated driving of the vehicle is canceled, the pressure detected by the steering sensor is lower than the specified value and the accelerator sensor no longer detects the operation of the accelerator pedal by the driver.

The controller is preferably configured to set a travel route and to control the vehicle travels along the travel route, thereby making the vehicle drive automatically.

The controller is preferably configured to implement automatic lane keeping, and/or an automatic lane change, thereby making the vehicle drive automatically.

The automated driving control system preferably includes a switch provided on the steering wheel and/or a center console of the vehicle. The controller is preferably configured to cancel the automated driving of the vehicle in the case where the switch is not operated.

The accelerator sensor is preferably configured to detect an operation amount of the accelerator pedal.

A vehicle preferably includes the above automated driving control system.

### [Advantage]

According to the automated driving control system, it is possible to switch the automated driving to the manual driving without the driver feeling bothersome and to appropriately secure the safety during this switching.

### [Brief Description of the Drawings]

[Fig. 1] Fig. 1 is a block diagram illustrating a schematic configuration of an automated driving control system according to an embodiment of the present invention.
[Fig. 2] Fig. 2 is an explanatory view of a basic concept of switching of a driving mode in the embodiment of the present invention.
[Fig. 3] Fig. 3 is a flowchart illustrating switching processing from a first automated driving mode to manual driving mode according to the embodiment of the present invention.

### [Embodiments for Carrying Out the Invention]

A description will hereinafter be made on an automated driving control system according to an embodiment of the present invention with reference to the accompanying drawings . All of the features as shown in the drawings may not necessarily be essential.

### [System Configuration]

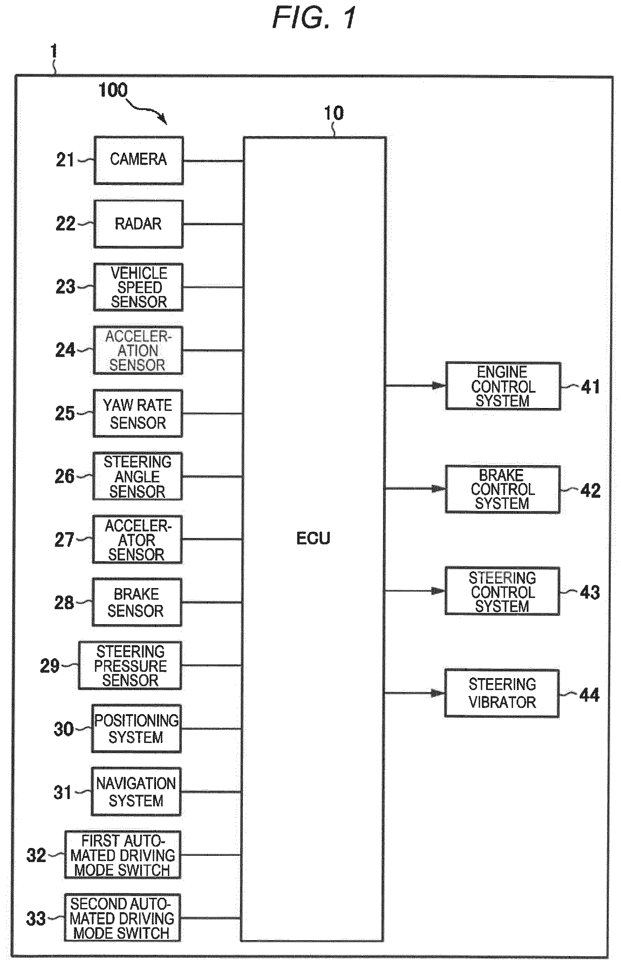

A description will firstly be made on a configuration of the automated driving control system according to the embodiment of the present invention with reference to Fig. 1. Fig. 1 is a block diagram illustrating a schematic configuration of the automated driving control system according to the embodiment of the present invention.

An automated driving control system 100 is configured to make a vehicle (hereinafter appropriately referred to as a "host vehicle") 1 drive automatically. In one example, the host vehicle 1 includes the automated driving control system 100, and then the automated driving control system 100 is configured to execute automated driving control for setting a travel route for travel of the vehicle 1 on a travel road and making the vehicle 1 travel along this travel route. As illustrated in Fig. 1, the automated driving control system 100 has an electronic control unit (ECU) 10, one or plural types of sensors, and one or plural control systems.

More specifically, the plural types of the sensors are a camera 21, a radar 22, a vehicle speed sensor 23 for detecting behavior of the vehicle 1 and a driving operation by an occupant, an acceleration sensor 24, a yaw rate sensor 25, a steering angle sensor 26, an accelerator sensor 27, a brake sensor 28, and a steering pressure sensor 29. The plural types of the sensors further include a positioning system 30 for detecting a position of the vehicle 1, a navigation system 31, a first automated driving mode switch 32, and a second automated driving mode switch 33. The plural control systems are an engine control system 41, a brake control system 42, a steering control system 43, and a steering vibrator 44.

Moreover, other types of the sensors may be a peripheral sonar system for measuring a distance from and a position of a structure around the vehicle 1, a corner radar provided at each of four corners of the vehicle 1 to measure an approach of the peripheral structure, and an inner camera for capturing an image of the inside of a cabin of the vehicle 1.

The ECU 10 performs various calculations on the basis of signals received from the plural types of the sensors, and sends control signals to the engine control system 41, the brake control system 42, and the steering control system 43 so as to appropriately actuate an engine system, a brake system, and a steering system, respectively. The ECU 10 is constructed of a computer that includes one or more processors (typically CPUs), memory (ROM, RAM, or the like) for storing various programs, an input/output device, and the like. The ECU 10 corresponds to an example of the "controller" in the present invention.

The camera 21 captures an image around the vehicle 1 and outputs image data. Based on the image data received from the camera 21, the ECU 10 identifies objects (for example, a preceding vehicle (a front vehicle), a following vehicle (a rear vehicle), a parked vehicle, a pedestrian, a travel road, road marking lines (a lane divider, a white line, and a yellow line), a traffic signal, a traffic sign, a stop line, an intersection, an obstacle, and the like). The ECU 10 may acquire information on the object from the outside through a traffic infrastructure, inter-vehicle communication, or the like. In this way, a type, a relative position, a moving direction, and the like of the object are identified.

The radar 22 measures the position and a speed of the object (particularly, the preceding vehicle, the following vehicle, the parked vehicle, the pedestrian, a dropped object on the travel road, or the like). For example, a millimeter-wave radar can be used as the radar 22. The radar 22 transmits a radio wave in an advancing direction of the vehicle 1, and receives a reflected wave that is generated when the object reflects the transmitted wave. Then, based on the transmitted wave and the received wave, the radar 22 measures a distance between the vehicle 1 and the object (for example, an inter-vehicular distance) and a relative speed of the object to the vehicle 1. In this embodiment, instead of the radar 22, a laser radar, an ultrasonic sensor, or the like may be used to measure the distance from and the relative speed of the obj ect. Alternatively, plural types of sensors may be used to constitute a position and speed measuring device.

Based on the travel road information and the obstacle information that are acquired by the camera 21 and the radar 22, the ECU 10 sets the travel route for the travel of the vehicle 1 in automated driving (particularly a first automated driving mode). Here, the travel road information includes, for example, information on a shape of the travel road (a straight road, a curved road, or a curvature of the curved road), a travel road width, the number of lanes, a lane width, regulation information of the travel road designated on the traffic sign or the like (a speed limit or the like), the intersection, a crosswalk, and the like. The obstacle information includes information on presence or absence of the obstacle on the travel road of the vehicle 1 (for example, the object such as the preceding vehicle, the following vehicle, the parked vehicle, or the pedestrian that can possibly be the obstacle in travel of the vehicle 1), a moving direction of the obstacle, a moving speed of the obstacle, and the like.

The vehicle speed sensor 23 detects an absolute speed of the vehicle 1. The acceleration sensor 24 detects acceleration of the vehicle 1. This acceleration includes acceleration in a longitudinal direction and acceleration in a lateral direction (that is, lateral acceleration). The acceleration includes not only a change rate of the speed in a speed increasing direction but also a change rate of the speed in a speed reducing direction (that is, deceleration).

The yaw rate sensor 25 detects a yaw rate of the vehicle 1. The steering angle sensor 26 detects a rotation angle (a steering angle) of a steering of the vehicle 1. The ECU 10 performs a specified calculation on the basis of the absolute speed detected by the vehicle speed sensor 23 and the steering angle detected by the steering angle sensor 26, so as to be able to acquire a yaw angle of the vehicle 1. The accelerator sensor 27 detects an operation of an accelerator pedal by a driver, more specifically, a depression amount of such a pedal (an accelerator operation amount). The brake sensor 28 detects an operation of a brake pedal by the driver, more specifically, a depression amount of such a pedal. The steering pressure sensor 29 is a pressure sensor that detects a pressure applied to the steering by the driver (hereinafter appropriately referred to as a "steering pressure"). The steering pressure sensor 29 corresponds to an example of the "steering sensor" in the present invention.

The positioning system 30 is a GPS system and/or a gyroscopic system, and detects the position of the vehicle 1 (current vehicle position information). The navigation system 31 stores map information therein and can provide the map information to the ECU 10. Based on the map information and the current vehicle position information, the ECU 10 identifies a road, the intersection, the traffic signal, a building, and the like that exist around (particularly, in the advancing direction of) the vehicle 1. The map information may be stored in the ECU 10. The navigation system 31 also acquires the travel road information described above.

In this embodiment, when the vehicle 1 performs the automated driving, the vehicle 1 can selectively be applied with one of two automated driving modes (the first automated driving mode and a second automated driving mode) at different automation rates. The vehicle 1 may have only one of the first automated driving mode and the second automated driving mode. The first automated driving mode is a driving mode in which the accelerator operation, the brake operation, and the steering operation of the vehicle 1 are performed automatically. The second automated driving mode is a driving mode, the automation rate of which is lower than that of the first automated driving mode, and is a driving mode in which the steering operation of the vehicle 1 is performed manually and the accelerator operation and the brake operation of the vehicle 1 are performed automatically. For example, the second automated driving mode is a driving mode in which the speed of the vehicle 1 is controlled automatically such that the vehicle 1 travels while keeping a specified vehicle speed (the vehicle speed set by the driver) and/or that the vehicle 1 follows the preceding vehicle while keeping the inter-vehicular distance that is equal to or longer than a specified distance. This second automated driving mode corresponds to so-called cruise control (auto-cruise). Meanwhile, the first automated driving mode is typically a driving mode to execute driving control (travel control) of the vehicle 1 such that the vehicle 1 travels along the travel route set on the travel road. For example, the first automated driving mode is a driving mode capable of implementing functions of automatic lane keeping, an automatic lane change, and the like of the vehicle 1 in addition to the functions implemented in the second automated driving mode described above.

The first automated driving mode switch 32 is a switch for setting the vehicle 1 in the first automated driving mode. The second automated driving mode switch 33 is a switch for setting the vehicle 1 in the second automated driving mode. Each of these first automated driving mode switch 32 and second automated driving mode switch 33 is a button switch (a push-button switch) provided to the steering, a center console, or the like, a touchscreen provided to a display section installed in the cabin (in this case, the driver touches the touchscreen to select the driving mode), or the like. The driver may be able to select the driving mode by voice. In such a case, a processor (may be the ECU10) that analyzes the voice input from a microphone functions as the switch.

The engine control system 41 controls an engine of the vehicle 1. The engine control system 41 is a component capable of regulating engine output (drive power) and, for example, includes an ignition plug, a fuel injection valve, a throttle valve, a variable valve mechanism that changes opening/closing timing of intake/exhaust valves, and the like. When the vehicle 1 has to be accelerated or decelerated, the ECU 10 sends the control signal to the engine control system 41 so as to change the engine output.

The brake control system 42 controls a brake device of the vehicle 1. The brake control system 42 is a component capable of regulating a braking force of the brake device and, for example, includes a hydraulic pump, a valve unit, and the like. When the vehicle 1 has to be decelerated, the ECU 10 sends the control signal to the brake control system 42 so as to generate the braking force.

The steering control system 43 controls a steering device of the vehicle 1. The steering control system 43 is a component capable of regulating the steering angle of the vehicle 1 and, for example, includes an electric motor for an electric power steering system, and the like. When the advancing direction of the vehicle 1 has to be changed, the ECU 10 sends the control signal to the steering control system 43 so as to change a steering direction.

The steering vibrator 44 is a device configured to vibrate the steering wheel (the steering). For example, the steering vibrator 44 has a vibration motor installed in the steering, and the like. When the control signal is sent from the ECU 10, the steering vibrator 44 is operated to vibrate the steering.

### [Switching of Driving Mode]

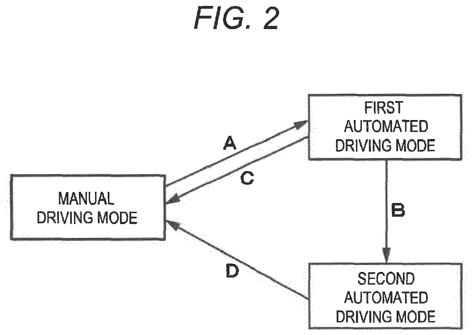

Next, a description will be made on a basic concept of switching of the driving mode in the embodiment of the present invention with reference to Fig. 2. As illustrated in Fig. 2, in this embodiment, the ECU 10 has, as the driving modes, a manual driving mode in which manual driving by the driver is performed; the first automated driving mode in which the accelerator operation, the brake operation, and the steering operation of the vehicle 1 are performed automatically; and the second automated driving mode in which the steering operation of the vehicle 1 is performed manually while the accelerator operation and the brake operation of the vehicle 1 are performed automatically.

First, a description will be made on switching from the manual driving mode to the first automated driving mode as indicated by an arrow A in Fig. 2. First, when the driver turns on the first automated driving mode switch 32 in the manual driving mode, the ECU 10 determines whether the vehicle 1 is in a state capable of performing the first automated driving mode. In the case where the vehicle 1 is in a state capable of generating a route (a travel route) to travel in the first automated driving mode, and/or in the case where a situation around the vehicle 1 is a situation where the first automated driving mode can be initiated safely, the ECU 10 determines that the vehicle 1 is in the state capable of performing the first automated driving mode. In the case where the ECU 10 can acquire required information to generate the travel route (the travel road information and the obstacle information), the ECU 10 determines that it is in a state capable of generating the travel route. For example, in the case where the accurate information on the lane, the object, or the like cannot be acquired due to failure of the camera 21 or the radar 22, the ECU 10 determines that it is in a state incapable of generating the travel route. Meanwhile, for example, in the case where the vehicle 1 travels on a curved road, in the case where the intersection or the crosswalk exists in front of the vehicle 1, or in the case where the preceding vehicle exists near the vehicle 1, the ECU 10 determines that the situation around the vehicle 1 is not the situation where the first automated driving mode can be initiated safely.

In such a period that it is determined whether the vehicle 1 is in the state capable of performing the first automated driving mode (may be a part of such a period), the ECU 10 may cause the steering vibrator 44 to vibrate the steering so as for the driver to hold the steering.

Next, when determining that the vehicle 1 is in the state capable of performing the first automated driving mode, the ECU 10 permits switching from the manual driving mode to the first automated driving mode (in other words, the driving mode set for the vehicle 1 is shifted to the first automated driving mode in the ECU 10) . At this time, the ECU 10 starts calculating the travel route, which is used in the first automated driving mode, and the like . In addition, at the same time as permitting switching to the first automated driving mode just as described, the ECU 10 generates specified display (display on a liquid-crystal panel, lighting of a lamp, or the like) or outputs a specified voice, so as to notify the driver that the first automated driving mode can be performed. Next, in the case where, after switching to the first automated driving mode is permitted, the driver releases the steering in a state where the driver operates neither the accelerator pedal nor the brake pedal, the ECU 10 initiates the first automated driving mode. In this case, the ECU 10 determines presence or absence of the operations of the accelerator pedal and the brake pedal on the basis of the signals from the accelerator sensor 27 and the brake sensor 28, and determines whether the steering is held/released on the basis of the signal from the steering pressure sensor 29. In particular, in the case where the pressure (the steering pressure), which is detected by the steering pressure sensor 29, is lower than a specified value, the ECU 10 determines that the steering is released. On the other hand, in the case where the steering pressure is equal to or higher than the specified value, the ECU 10 determines that the steering is held.

Next, a description will be made on switching from the first automated driving mode to the second automated driving mode as indicated by an arrow B in Fig. 2. First, when the driver turns on the second automated driving mode switch 33 in the first automated driving mode, the ECU 10 determines whether the vehicle 1 is in a state capable of performing the second automated driving mode. Basically, the ECU 10 uses a similar condition to the condition described above in relation to switching from the manual driving mode to the first automated driving mode, so as to determine whether the vehicle 1 is in the state capable of performing the second automated driving mode. For example, in the case where the accurate information on the lane, the object, or the like cannot be acquired due to the failure of the camera 21 or the radar 22, in the case where the vehicle 1 travels on the curved road, in the case where the intersection or the crosswalk exists in front of the vehicle 1, or in the case where the preceding vehicle exists near the vehicle 1, the ECU 10 determines that the vehicle 1 is not in the state capable of performing the second automated driving mode.

In one example, when determining that the vehicle 1 is in the state capable of performing the second automated driving mode as described above, the ECU 10 immediately cancels the first automated driving mode and shifts the driving mode to the second automated driving mode. In another example, in the case where, after the ECU 10 determines that the vehicle 1 is in the state capable of performing the second automated driving mode, the driver holds or operates the steering, the ECU 10 cancels the first automated driving mode and shifts the driving mode to the second automated driving mode. That is, the ECU 10 does not shift the driving mode to the second automated driving mode until the driver holds or operates the steering. In this example, the ECU 10 determines whether the steering is held on the basis of the signal from the steering pressure sensor 29, or determines whether the steering is operated on the basis of the signal from the steering angle sensor 26 . More specifically, in the case where the pressure, which is detected by the steering pressure sensor 29, is equal to or higher than the specified value, the ECU 10 determines that the steering is held. Meanwhile, in the case where a variation in the steering angle, which is detected by the steering angle sensor 26, is equal to or larger than a specified value, the ECU 10 determines that the steering is operated.

Next, a description will be made on switching from the first automated driving mode to the manual driving mode as indicated by an arrow C in Fig. 2. In one example, when the driver turns off the first automated driving mode switch 32 in the first automated driving mode, the ECU 10 cancels the first automated driving mode and shifts the driving mode to the manual driving mode. In another example, when, in the first automated driving mode, the driver holds the steering and the driver operates the accelerator pedal or the brake pedal, the ECU 10 cancels the first automated driving mode and shifts the driving mode to the manual driving mode. The method for determining the operations of the steering, the accelerator pedal, and the brake pedal is as described above. In further another example, when the driver operates the brake pedal in the first automated driving mode, the ECU 10 cancels the first automated driving mode and shifts the driving mode to the manual driving mode. In this example, the ECU 10 may partially cancel the control in the first automated driving mode instead of completely cancelling the first automated driving mode and without shifting the driving mode to the manual driving mode, that is, may continue the first automated driving mode and may partially execute the control therein.

Next, a description will be made on switching from the second automated driving mode to the manual driving mode as indicated by an arrow D in Fig. 2. In one example, when the driver turns off the second automated driving mode switch 33 in the second automated driving mode, the ECU 10 cancels the second automated driving mode and shifts the driving mode to the manual driving mode. In another example, when the driver operates the brake pedal in the second automated driving mode, the ECU 10 cancels the second automated driving mode and shifts the driving mode to the manual driving mode.

### [Contents of Control]

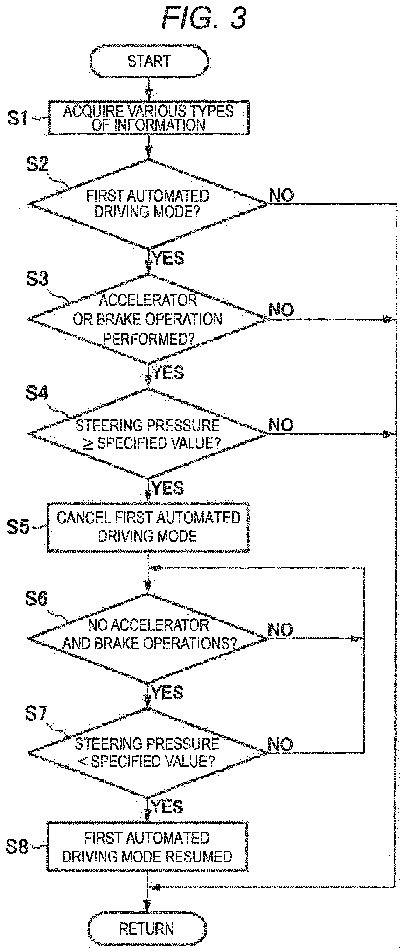

Next, a description will be made on specific control contents according to the embodiment of the present invention with reference to Fig. 3. Fig. 3 is a flowchart illustrating switching processing from the first automated driving mode to the manual driving mode according to the embodiment of the present invention. The processing related to this flowchart is repeatedly executed by the ECU 10 in specified cycles.

First, in step S1, the ECU 10 acquires various types of information from the plural types of the sensors illustrated in Fig. 1. In particular, the ECU 10 at least acquires information corresponding to the output signals from the camera 21, the radar 22, the steering angle sensor 26, the accelerator sensor 27, the brake sensor 28, the steering pressure sensor 29, the first automated driving mode switch 32, and the second automated driving mode switch 33.

Next, in step S2, the ECU 10 determines whether the current driving mode is the first automated driving mode. In one example, the ECU 10 makes the determination in step S2 on the basis of an on/off state of the first automated driving mode switch 32, or the like. As a result, if the current driving mode is the first automated driving mode (step S2: YES), the processing proceeds to step S3. If the current driving mode is not the first automated driving mode (step S2: NO), the ECU 10 terminates the processing related to the flowchart illustrated in Fig. 3.

Next, in step S3, the ECU 10 determines whether the accelerator pedal or the brake pedal is operated by the driver on the basis of the signals from the accelerator sensor 27 and the brake sensor 28. As a result, if the accelerator pedal or the brake pedal is operated, e.g. if an operation amount of the accelerator pedal or the brake pedal is larger than 0, (step S3: YES), the processing proceeds to step S4. If none of the accelerator pedal and the brake pedal is operated, e. g. if the operation amount of the accelerator pedal is 0 and the operation amount of the brake pedal is 0, (step S3: NO), the ECU 10 terminates the processing related to the flowchart illustrated in Fig. 3.

Next, in step S4, the ECU 10 determines whether the pressure (the steering pressure) detected by the steering pressure sensor 29 is equal to or higher than the specified value. Here, the ECU 10 determines whether the driver holds the steering. Thus, as the specified value used to determine the steering pressure in step S4, a value with which holding of the steering can accurately be determined is adopted. As a result of step S4, if the steering pressure is equal to or higher than the specified value (step S4: YES), that is, if the driver holds the steering, the processing proceeds to step S5. On the other hand, if the steering pressure is lower than the specified value (step S4: NO), that is, if the driver releases the steering, the ECU 10 terminates the processing related to the flowchart illustrated in Fig. 3.

Next, in step S5, since the driver operates the accelerator pedal or the brake pedal and holds the steering, the ECU 10 cancels the first automated driving mode. That is, in the case where the driver operates the accelerator pedal or the brake pedal while holding the steering in the first automated driving mode, the ECU 10 promptly switches the driving mode of the vehicle 1 from the first automated driving mode to the manual driving mode even when the driver does not operate the first automated driving mode switch 32. In this case, the ECU 10 terminates automated control for the accelerator operation, the brake operation, and the steering operation, and executes control according to at least the accelerator operation or the brake operation by the driver. More specifically, the ECU 10 executes control for applying the drive power to the vehicle 1 so as to accelerate the vehicle 1 according to an accelerator pedal operation amount by the driver, or executes control for applying the brake force to the vehicle 1 so as to decelerate the vehicle 1 according to a brake pedal operation amount by the driver. Meanwhile, in the case where the driver operates the steering, the ECU 10 also executes control corresponding to the steering operation by the driver.

Next, in step S6, the ECU 10 determines whether the accelerator pedal or the brake pedal is not operated on the basis of the signals from the accelerator sensor 27 and the brake sensor 28. If none of the accelerator pedal and the brake pedal is operated (step S6: YES), the processing proceeds to step S7. If the accelerator pedal or the brake pedal is operated (step S6: NO), the processing returns to step S6, and the ECU 10 makes this determination again.

Next, in step S7, the ECU 10 determines whether the pressure (the steering pressure) detected by the steering pressure sensor 29 is lower than the specified value, that is, whether the driver has released the steering. As a result, if the steering pressure is equal to or higher than the specified value (step S7: NO), that is, if the driver holds the steering, the processing returns to step S6, and the ECU 10 makes the determination again. That is, the ECU 10 continues the manual driving while the driver operates the accelerator pedal or the brake pedal and/or holds the steering.

On the other hand, if the steering pressure is lower than the specified value (step S7: YES), that is, if the driver has released the steering, the processing proceeds to step S8. In step S8, in order to resume the first automated driving mode, the ECU 10 switches the driving mode of the vehicle 1 from the manual driving mode to the first automated driving mode. That is, in the case where the driver does not operate the accelerator pedal or the brake pedal and releases the steering in the manual driving mode, the ECU 10 promptly switches the driving mode of the vehicle 1 from the manual driving mode to the first automated driving mode even when the driver does not operate the first automated driving mode switch 32. In this case, the ECU 10 resumes the automated control for the accelerator operation, the brake operation, and the steering operation.

### [Operation and Effects]

Next, a description will be made on operation and effects of the automated driving control system according to the embodiment of the present invention.

According to this embodiment, in the case where the driver holds the steering and operates the accelerator pedal in the first automated driving, the ECU 10 cancels the first automated driving and controls the vehicle 1 at least according to the operation of the accelerator pedal. That is, in the case where the driver operates the accelerator pedal and holds the steering in the first automated driving, the ECU 10 promptly switches the driving mode of the vehicle 1 from the first automated driving mode to the manual driving mode even when the driver does not operate the first automated driving mode switch 32. In this way, it is possible to appropriately switch from the first automated driving to the manual driving during the first automated driving such that the driver can promptly and manually perform the steering operation and the accelerator operation to pass the front vehicle at a low vehicle speed, for example.

Meanwhile, according to this embodiment, when both conditions of the operation of the accelerator pedal and holding of the steering are satisfied, the first automated driving is switched to the manual driving. Thus, such switching can be performed after the driver is ready therefor. As a result, it is possible to appropriately secure safety during switching from the first automated driving to the manual driving. In one example, in the case where the accelerator operation is only required to switch the first automated driving to the manual driving, the first automated driving is switched to the manual driving when the driver's foot is unintentionally stuck to the accelerator pedal, which possibly causes the unexpected acceleration. However, according to this embodiment, it is possible to appropriately suppress generation of such unexpected acceleration.

As it has been described so far, according to this embodiment, it is possible to switch the first automated driving to the manual driving without the driver feeling bothersome and to appropriately secure the safety during this switching.

According to this embodiment, in the case where the driver no longer holds the steering and no longer operates the accelerator pedal after cancellation of the first automated driving, the ECU 10 resumes the automated driving. That is, in the case where the driver does not operate the accelerator pedal and releases the steering in the manual driving mode, the ECU 10 promptly switches the driving mode of the vehicle 1 from the manual driving mode to the first automated driving mode even when the driver does not operate the first automated driving mode switch 32. In this way, it is possible to appropriately resume the first automated driving mode from the manual driving mode without the driver feeling bothersome.

According to this embodiment, in the first automated driving, in the case where the driver operates the accelerator pedal without holding the steering, or in the case where the driver holds the steering without operating the accelerator pedal, the ECU 10 continues the first automated driving. That is, the ECU 10 does not switch the first automated driving to the manual driving in the case where only the accelerator operation is performed or only the steering is held in the first automated driving. In this way, it is possible to effectively secure the safety during switching from the first automated driving to the manual driving.

According to this embodiment, when the driver makes a request to set the first automated driving mode, the ECU 10 determines whether the vehicle 1 is in the state capable of performing the first automated driving. Then, if the ECU 10 determines that the vehicle 1 is in the state capable of performing the first automated driving, the first automated driving of the vehicle 1 is performed. Therefore, it is possible to appropriately secure the safety during shifting to the first automated driving mode.

### [Modified Example]

In the embodiment described above, the example in which the present invention is applied to the vehicle 1 having the engine as a drive source has been described (see Fig. 1). However, the present invention can also be applied to a vehicle having an electric motor as the drive source (an electric vehicle or a hybrid vehicle). In addition, in the above-described embodiment, the braking force is applied to the vehicle 1 by the brake device (the brake control system 42). However, in another example, the braking force may be applied to the vehicle by regeneration of the electric motor.

### [Description of Reference Signs and Numerals]

- 1: Vehicle
- 10: ECU
- 21: Camera
- 22: Radar
- 26: Steering angle sensor
- 27: Accelerator sensor
- 28: Brake sensor
- 29: Steering pressure sensor
- 32: First automated driving mode switch
- 33: Second automated driving mode switch
- 41: Engine control system
- 42: Brake control system
- 43: Steering control system
- 100: Automated driving control system

## Claims

1. An automated driving control system (100) for a vehicle (1), the automated driving control system (100) comprising:
a steering sensor (29) configured to detect holding of a steering wheel by a driver;
an accelerator sensor (27) configured to detect an operation of an accelerator pedal by the driver; and
a controller (10) configured to execute control for making the vehicle (1) drive automatically, wherein
the controller (10) is configured to cancel the automated driving of the vehicle (1) and control the vehicle (1) at least according to the operation of the accelerator pedal in the case where the steering sensor (29) detects holding of the steering wheel by the driver and the accelerator sensor (27) detects the operation of the accelerator pedal by the driver while the vehicle (1) is made to drive automatically.

2. The automated driving control system (100) according to claim 1, wherein
the controller (10) is configured to resume the automated driving of the vehicle (1) in the case where, after the automated driving of the vehicle (1) is canceled, the steering sensor (29) no longer detects holding of the steering wheel by the driver and the accelerator sensor (27) no longer detects the operation of the accelerator pedal by the driver.

3. The automated driving control system (100) according to claim 1 or 2, wherein
the controller (10) is configured to continue the automated driving of the vehicle (1) in the case where the steering sensor (29) does not detect holding of the steering wheel by the driver but the accelerator sensor (27) detects the operation of the accelerator pedal by the driver while the vehicle (1) is made to travel automatically.

4. The automated driving control system (100) according to any one of the preceding claims, wherein
the controller (10) is configured to continue the automated driving of the vehicle (1) in the case where the accelerator sensor (27) does not detect the operation of the accelerator pedal by the driver but the steering sensor (29) detects holding of the steering wheel by the driver while the vehicle (1) is made to travel automatically.

5. The automated driving control system (100) according to any one of the preceding claims, wherein
the controller (10) is configured to determine whether the vehicle (1) is in a state capable of performing the automated driving when the driver makes an automated driving request and to perform the automated driving of the vehicle (1) when determining that the vehicle (1) is in the state capable of performing the automated driving.

6. The automated driving control system (100) according to any one of the preceding claims, wherein
the steering sensor (29) is configured to detect a pressure applied to the steering wheel.

7. The automated driving control system (100) according to any one of the preceding claims, wherein
the controller (10) is configured to detect holding of the steering wheel by the driver in the case where the pressure detected by the steering sensor (29) is equal to or higher than a specified value.

8. The automated driving control system (100) according to claim 7, wherein
the controller (10) is configured to cancel the automated driving of the vehicle (1) and control the vehicle (1) at least according to the operation of the accelerator pedal in the case where the pressure detected by the steering sensor (29) is equal to or higher than the specified value and the accelerator sensor (27) detects the operation of the accelerator pedal by the driver while the vehicle (1) is made to drive automatically.

9. The automated driving control system (100) according to claim 8, wherein
the controller (10) is configured to resume the automated driving of the vehicle (1) in the case where, after the automated driving of the vehicle (1) is canceled, the pressure detected by the steering sensor (29) is lower than the specified value and the accelerator sensor (27) no longer detects the operation of the accelerator pedal by the driver.

10. The automated driving control system (100) according to any one of the preceding claims, wherein
the controller (10) is configured to set a travel route and to control the vehicle (1) travels along the travel route, thereby making the vehicle (1) drive automatically.

11. The automated driving control system (100) according to any one of the preceding claims, wherein
the controller (10) is configured to implement automatic lane keeping, and/or an automatic lane change, thereby making the vehicle (1) drive automatically.

12. The automated driving control system (100) according to any one of the preceding claims, further comprising a switch (32, 33) provided on the steering wheel and/or a center console of the vehicle (1), wherein
the controller (10) is configured to cancel the automated driving of the vehicle (1) in the case where the switch (32, 33) is not operated.

13. The automated driving control system (100) according to any one of the preceding claims, wherein
the accelerator sensor (27) is configured to detect an operation amount of the accelerator pedal.

14. A vehicle comprising the automated driving control system (100) according to any one of the preceding claims.

15. A method of automated driving control for a vehicle (1), comprising:
making the vehicle (1) drive automatically;
detecting holding of a steering wheel by a driver;
detecting an operation of an accelerator pedal by the driver; and
cancelling the automated driving of the vehicle (1) and controlling the vehicle (1) at least according to the operation of the accelerator pedal in the case where the driver holds the steering wheel and the driver operates the accelerator pedal while the vehicle (1) is made to drive automatically.
